# EUROPÄISCHE PATENTSCHRIFT

(11) **EP 0 597 981 B1**
(45) Veröffentlichungstag und Bekanntmachung des Hinweises auf die Patenterteilung: **06.03.1996**
(21) Anmeldenummer: 92917016.5
(22) Anmeldetag: 11.08.1992
(51) Int. Cl.: B65G 47/36, B65G 47/61, A41H 43/02

(54) **VERFAHREN UND VORRICHTUNG ZUM SORTIEREN VON AN HAKEN HÄNGENDEM GUT**
PROCESS AND DEVICE FOR SORTING ITEMS SUSPENDED ON HOOKS
PROCEDE ET DISPOSITIF POUR LE TRIAGE D'ARTICLES SUSPENDUS A DES CROCHETS

(30) Priorität: 12.08.1991 DE 4126615
(43) Veröffentlichungstag der Anmeldung: 25.05.1994
(73) Patentinhaber: Gärtner, Franz, D-97656 Oberelsbach (DE)
(72) Erfinder: OUWEJAN, Josephus, Jan, NL-3004 ND Veenedaal (NL)
(74) Vertreter: Patentanwälte Dr. Solf & Zapf
(86) Internationale Anmeldenummer: EP9201825
(87) Internationale Veröffentlichungsnummer: WO9303985

(56) Entgegenhaltungen:
- EP-A- 0 005 539
- EP-A- 0 376 382

## Beschreibung

Die Erfindung betrifft ein Verfahren und eine Vorrichtung zum Sortieren von an Haken oder Bügeln oder dergleichen Warenträgern hängendem Gut, insbesondere von auf Kleiderbügeln hängenden Bekleidungsstücken.

In der Bekleidungsindustrie werden in der Regel Bekleidungsstücke unterschiedlicher Art, Form, Größe, Farbe oder dergleichen, beispielsweise einem Orderauftrag zugeordnet, gesammelt. Dies erfolgt zum Beispiel unmittelbar nach dem Nähen und Bügeln der Bekleidungsstücke oder zum Beispiel aus einem Kollektionslager heraus, in dem gleiche Bekleidungsstücke gruppiert und geordnet gelagert sind. Beispielsweise werden von einem Kunden 10 Sakkos blau, 10 Sakkos schwarz, 3 Hosen grau, 4 Hosen anderer Machart mit einem Auftrag geordert. Zur maschinellen Bewältigung dieser Sortier- und Verteilarbeit sind Sortiervorrichtungen, sogenannte Sortierer bekannt, die mit elektronischen Erfassungseinrichtungen und elektronisch gesteuerten Schalteinrichtungen ausgerüstet sind.

Diese Sortiervorrichtungen können die auf Kleiderbügeln hintereinander hängenden Bekleidungsstücke während des Transports registrieren und die Kleiderbügel auf Schienensystemen transportieren, in denen elektronisch schaltbare Schleuseneinrichtungen an bestimmten Stellen des Förderweges eingebaut sind. Durch eine aufgrund der Registrierung vorprogrammierte Schaltung wird eine bestimmte Schleuse geöffnet, wenn ein bestimmtes elektronisch erfaßtes Bekleidungsstück sich im Schleusenraum befindet. Der Kleiderbügel mit dem bestimmten Bekleidungsstück verläßt durch die Schleuse die Kleiderbügelreihe und gelangt zum Beispiel auf eine Sammelschiene, auf der eine Kollektionsorder zum Abtransport gesammelt wird.

Gleichgelagerte Aufgaben und Arbeiten fallen zum Beispiel in Wäschereien und Chemischen Reinigungen an.

Meistens werden in einem Sortierer die Bekleidungsstücke tragenden Kleiderbügel mit einer Schneckenfördereinrichtung einer Registrierstation zugeführt, in der sie elektronisch erfaßt werden. Von der Registrierstation werden sie mit einer Übergabeeinrichtung an ein Schienensystem übergeben, in dem sich die Schleuseneinrichtungen befinden. Im Bereich der Schleuseneinrichtungen nachgeordnet sind Übernahmeeinrichtungen und zum Beispiel als Zwischenlager dienende Sammelschieneneinrichtungen vorgesehen. Auf dem Schienensystem werden die Haken der Kleiderbügel zum Beispiel mit an Endlosketten angeordneten Mitnehmerfingern verschoben, das heißt, sie gleiten oder rutschen über die Schienen. Ein derartiger Sortierer wird beispielsweise in der EP-A2 0 064 100 beschrieben. Nachteilig bei diesen bekannten Sortierern ist, daß sie kompliziert aufgebaut sind, vor allem aber, daß sie sowohl bezüglich des Transports auf dem Schienensystem als auch bezüglich der Schleuseneinrichtung zu langsam arbeiten. Ein weiterer Nachteil ist, daß die Mittel zur Registrierung und Identifizierung an den Bekleidungsstücken angeordnet sind. Sie sind dort insbesondere dann nur schlecht erkennbar und erfaßbar, wenn sich die Bekleidungsstücke während des Transports unkontrolliert bewegen oder schiefhängen bzw. pendeln. Dies führt zu Fehlsortierungen, deren Vermeidung oder Behebung erheblichen Aufwand erfordert. Häufig erfolgt daher die Registrierung noch mit Handgeräten, d. h. durch eine Bedienperson.

Aufgabe der Erfindung ist, ein Verfahren und eine Vorrichtung zu schaffen, mit denen mit einfachen Mitteln rationell, sehr schnell und sicher vollautomatisch sortiert werden kann.

Diese Aufgabe wird durch die Merkmale des Anspruchs 1 und 6 gelöst. Vorteilhafte Weiterbildungen der Erfindung sind in den von diesen Ansprüchen abhängigen Unteransprüchen gekennzeichnet.

Ein wesentliches Grundprinzip der Erfindung beruht darauf, jeder zu sortierenden und dazu zu transportierenden Wareneinheit einen Zwischenhänger zuzuordnen, der auf einfache Weise mit einer gut erfaßbaren Leitkodierung für die Wareneinheit bzw. Warengruppe ausrüstbar ist und der unmittelbar einlaufseitig des Sortierers zwischen dem Haken eines Kleiderbügels und der Schiene des Schienensystems automatisch eingegliedert und nach Verlassen des Sortierers vom Haken automatisch wieder getrennt werden kann. Der Zwischenhänger ist mit einer Rolle ausgerüstet, die auf den Schienen des Schienensystems abrollt, und weist einen schließbaren Hakenfänger auf, der den Haken zum Beispiel des Kleiderbügels aufnimmt und während des Transports lagert sowie automatisch zur Aufnahme oder Abgabe eines Bügelhakens geöffnet werden kann. Zwischen dem Hakenfänger und der Rolle befindet sich der eigentliche Hängerkörper, der Mittel zur gut erkennbaren Anbringung von Kodierungen, zum Beispiel ausreichend große Flächen dafür,aufweist. Somit kann zum Beispiel gleichzeitig mit dem durch automatisch arbeitende Mittel bewirkten Zwischenhängen des Zwischenhängers zwischen die Schiene und den Warenträger eine Kodierung des Hängerkörpers oder Erfassung einer bereits auf dem Hängerkörper vorhandenen Kodierung erfolgen, die mit einer geeigneten Datenverarbeitungsanlage gespeichert wird, die wiederum das Durchschleusen durch und das Ausschleusen aus dem Sortierer steuert. Ausgeschleuste sortierte Ware wird mit automatisch arbeitenden Mitteln vom Zwischenhänger getrennt und in der Regel zusammen mit den Warenträgern, zum Beispiel den Kleiderbügeln verteilt.

Anhand der Zeichnungen wird die Erfindung im folgenden beispielhaft näher erläutert. Es zeigen:
- Fig. 1: eine Vorderansicht eines erfindungsgemäßen Zwischenhängers;
- Fig. 2: eine Seitenansicht des Zwischenhängers gemäß Fig. 1;
- Fig. 3: schematisch einen erfindungsgemäßen Sortierer in einer perspektivischen Layout-Darstellung;
- Fig. 4: perspektivisch die wesentlichen Bestandteile der Zwischenhängestation des Sortierers;
- Fig. 5: perspektivisch eine Bügelhakenentflechtungseinrichtung der Zwischenhängestation;
- Fig. 6: eine Seitenansicht der wesentlichen Bestandteile der Transportübernahmestation des Sortierers;
- Fig. 7: eine Frontansicht der Transportübernahmestation;
- Fig. 8: eine Seitenansicht eines Transportwagens mit Zwischenhängerklemmvorrichtung;
- Fig. 9: einen Horizontalschnitt durch den Transportwagen gemäß Fig. 8 entlang der Linie IX-IX in Fig. 8 mit Blickrichtung in Pfeilrichtung;
- Fig. 10: einen weiteren Horizontalschnitt durch den Transportwagen gemäß Fig. 8 entlang der Linie X-X in Fig. 8 mit Blickrichtung in Pfeilrichtung;

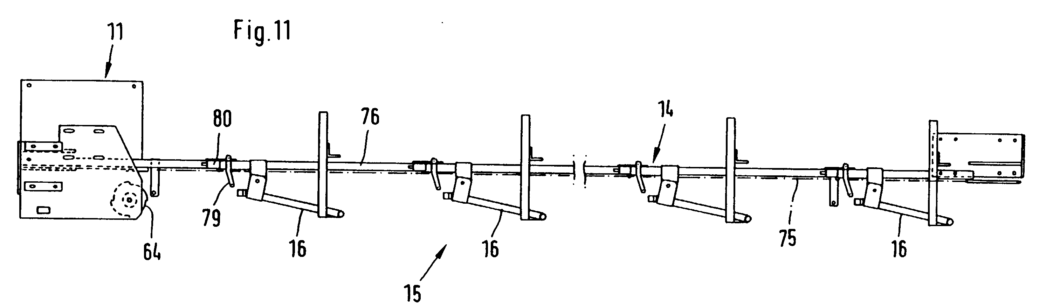

- Fig. 11: eine Seitenansicht der Ausschleusstrecke des Sortierers mit Ausschleusstationen;
- Fig. 12: perspektivisch die wesentlichen Bestandteile einer Ausschleusstation;
- Fig. 13: perspektivisch die wesentlichen Bestandteile der Abhängestation.

Die Rahmenkonstruktionen des Sortierers bzw. der Stationen des Sortierers sind nicht dargestellt, um die Übersichtlichkeit der Zeichnung nicht zu stören. Der Fachmann ist in der Lage, die beschriebenen wesentlichen Funktionsteile der Stationen so zu lagern, daß sie erfindungsgemäß als Funktionsteile des Sortierers arbeiten können.

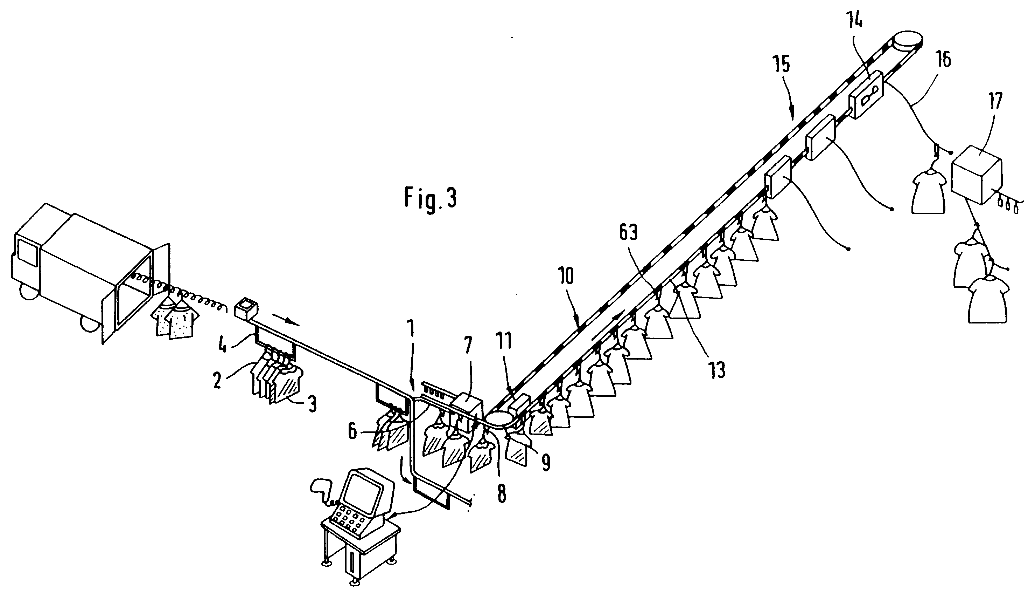

Der erfindungsgemäße Sortierer weist entsprechend Fig. 3 eine Bügelübernahmestation 1 auf, mit der auf Bügeln 2 hängende Bekleidungsstücke 3 von einem Trolley 4, die in Pfeilrichtung 5 transportiert werden, samt Bügel 2 auf eine Aufnahmestange 6 einer Zwischenhängestation 7 automatisch abgeleitet werden. In der Zwischenhängestation 7 werden die Bügel 2 von einem Zwischenhänger 8 aufgenommen, der auf einer Schiene 9 hängend rollt und samt Bügel 2 mit Bekleidungsstück 3 einer endlos geführten Sortiertransportstrecke 10 zugeleitet wird, was zum Beispiel auf einer einfachen Gefällestrecke erfolgen kann. Am Anfang der Transportstrecke 10 befindet sich eine Transportübernahmestation 11, in der jeder Zwischenhänger 8 von je einem Transportwagen 63 übernommen wird, wobei die Transportwagen 63 an einer endlos geführten, angetriebenen Transportkette 75 in bestimmtem Abstand festsitzend angeordnet sind. Von den Transportwagen 63 werden die Zwischenhänger 8 samt Bügel und Bekleidungsstücken einer Ausschleusstrecke 15 mit mehreren Ausschleusstationen 14 zugeführt, in denen jeweils Zwischenhänger 8 mit einem bestimmten Kleidungsstück samt Bügel aus dem jeweiligen Transportwagen 63 auf eine Sortierstange 16 mit Gefälle fallen und in eine Abhängestation 17 rollen, in der jeder Bügel 2 vom Zwischenhänger 8 automatisch getrennt wird. Die sortierten Bekleidungsstücke werden dem Sortierer entnommen; die Zwischenhänger 8 werden gesammelt der Zwischenhängestation 7 wieder zugeführt.

Durch die Verwendung von auf Rollen laufenden Zwischenhängern 8 und in bestimmtem, relativ kurzem Abstand angeordneten, relativ schnell antreibbaren Transportwagen 63 ist es gelungen, einen einfach aufgebauten, sehr schnell laufenden und damit sehr schnell sortierenden Sortierer zu schaffen. Die Rollen der Zwischenhänger 8 leisten auf Gefällestrecken, die zweckmäßigerweise zwischen den Stationen 1 und 7, sowie 7 und 11 als auch 14 und 17 vorgesehen sind, schon bei relativ geringer Neigung der Strecken einen schnellen Eigentransport. Die Transportwagen 63 können sehr schnell angetrieben werden. Das Zwischenhängen der Zwischenhänger erfordert ebenso wenig Zeit wie das Anhängen der Zwischenhänger an die Transportwagen. Sehr schnell arbeitet auch die Aushängeeinrichtung der Ausschleusstation, so daß insgesamt ein Sortierer geschaffen wurde, der sehr viel schneller arbeiten kann als herkömmliche Sortierer, obwohl ein zusätzlicher Arbeitsgang, nämlich das Zwischenhängen der Zwischenhänger in den Sortierablauf, eingefügt wurde.

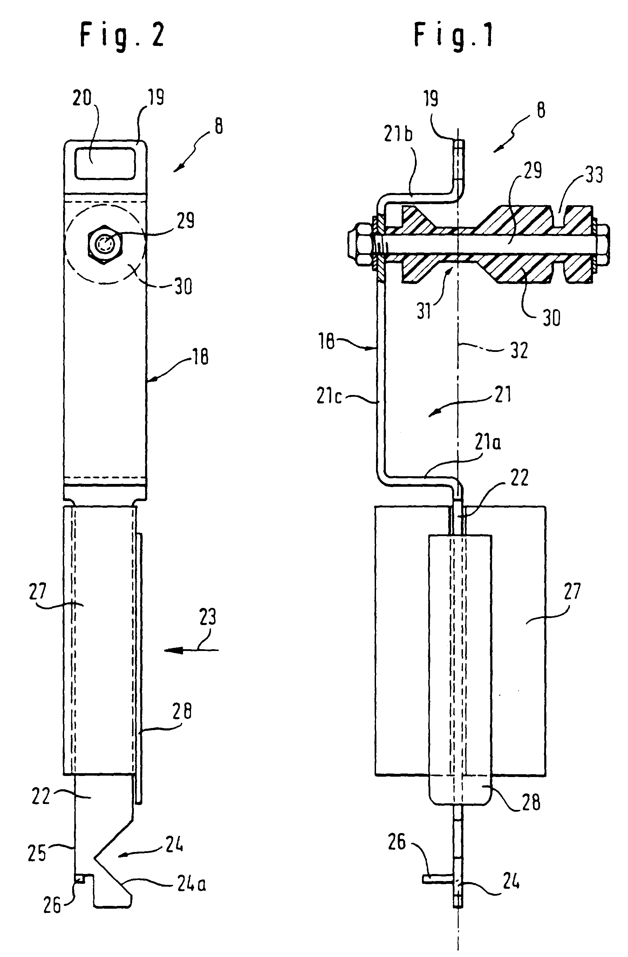

Ein zweckmäßiger Zwischenhänger 8 zum Begleiten der Warenträger 2 samt Ware 3 beim sortierenden Transportieren der Ware ist in den Fig. 1 und 2 abgebildet. Er besteht aus einem Flachstahlbandstab 18, der oben bzw. kopfendig einen vertikal ausgerichteten Einhängesteg 19 mit einer Einhängeöse 20 aufweist, an den sich nach unten eine horizontal ausgerichtete, seitlich aus der Flachebene bzw. Bandebene abgebogene U-förmige Abkröpfung 21 anschließt. Unterhalb der Abkröpfung befindet sich ein vertikal ausgerichteter Lagersteg 22, der fußendig mit einer in Transportrichtung (Pfeilrichtung 23 in Fig. 2) nach hinten offenen, dreieckigen Aussparung 24 endet. An der Vorderkante 25 des Lagerstegs 22 ist im Bereich der Aussparung 24 ein rechtwinklig aus der Bandebene abgebogener Anschlagsteg 26 angeordnet. Auf dem Lagersteg 22 sitzt frei vertikal gleitend ein vorzugsweise quaderförmiges Gewicht 27, das kürzer ist als der Lagersteg 22 und demgemäß zwischen dem unteren abgewinkelten U-Schenkel 21a der Abkröpfung 21 und dem Anschlagsteg 26 frei verschiebbar ist. Eine Abdecklasche 28, die auf dem Gewicht 27 angeordnet ist, überragt das Gewicht ein Stück nach unten und ist so angeordnet und positioniert, daß es die Aussparung 24 abdeckt bzw. verriegelt, wenn sich das Gewicht 27 in der untersten Stellung befindet.

Kurz unterhalb des oberen U-Schenkels 21b der Abkröpfung 21 ist eine Drehachse 29 im U-Bodensteg 21c, horizontal und senkrecht auf der Bodenstegebene stehend, befestigt, die eine Laufrolle 30 frei drehend lagert. Die Laufrolle 30 hat eine besondere Kontur, nämlich die einer Nähgarnrolle und weist demgemäß eine radiale Durchmesserverringerung bzw. Abmagerung 31 mit konvexer Abrollfläche zur Abstützung auf einer von der Rolle übergriffenen, komplementär gestalteten Laufschiene, auf der sie unter Schwerkraftwirkung abrollen soll, auf, wobei die axiale Mitte der Abmagerung 31 in der Flachbandebene 32 des Einhängestegs 19 und des Lagerstegs 22 liegt.

Außerhalb der Abmagerung 31 ist in dem dem U-Bodensteg 21c gegenüberliegenden Endbereich der Laufrolle 30 noch eine Ringnut 33 als Führungsrille eingebracht, deren Aufgabe weiter unten erläutert wird.

Die Funktion des Gewichts 27 ist zum einen, dem Zwischenhänger 8 ein ausreichendes Gewicht zu verleihen, selbständig auf einer Gefällestrecke bei schon geringem Gefälle stabil zu rollen, auch wenn keine Bügel oder Bügel ohne Bekleidungsstücke angehängt sind. Zum anderen bietet das Gewicht ausreichend große Flächen zur Anbringung von Kodierungen. Zum dritten sorgt es aufgrund der Schwerkraft für eine ausreichende Schließkraft bei der Abdeckung der Aussparung 24, so daß in der Aussparung 24 aufgenommene Bügelhaken nicht ohne weiteres aus der Aussparung herausrutschen können, obwohl die Aussparung 24 eine nach unten und außen gerichtete schräge Kante 24a aufweist. Aufgrund der schrägen Kante 24a können Bügelhaken von selbst aus der Aussparung 24 rutschen, wenn das Gewicht 27 angehoben und die Aussparung geöffnet wird. Gleichermaßen kann die Aussparung 24 aber auch nur dann Bügelhaken aufnehmen, wenn das Gewicht 27 nach oben geschoben ist.

Vorteilhaft am erfindungsgemäßen Zwischenhänger 8 ist noch zudem, daß eine Leitkodierung auf dem U-Bodensteg 21c angeordnet werden kann, der dazu eine ausreichende Fläche bietet, die sehr gut erkennbar und zugängig ist.

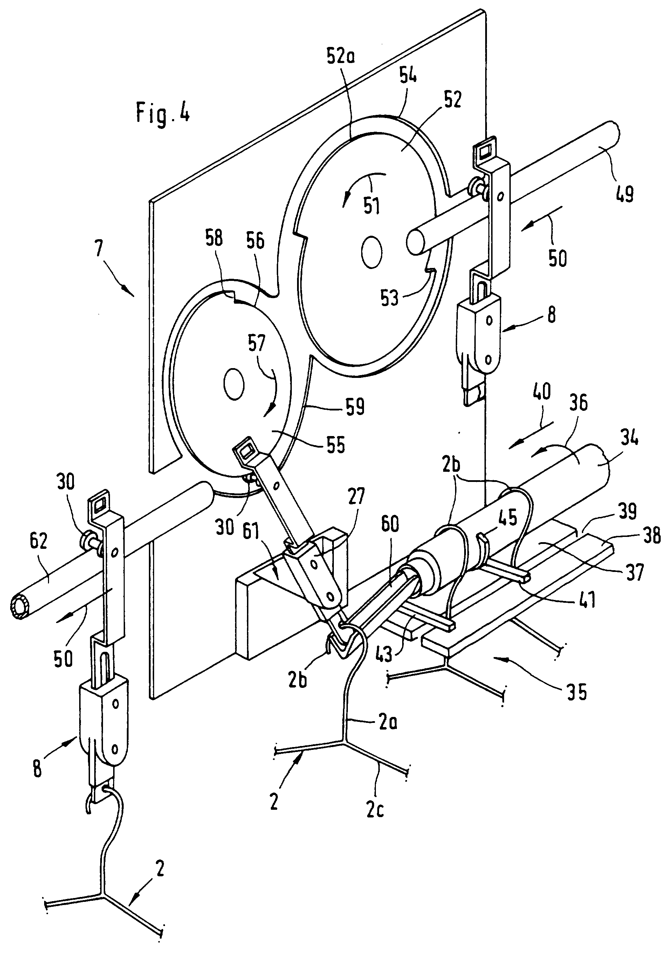

Zur Vereinigung der Zwischenhänger 8 mit den Warenträgern, zum Beispiel den Kleiderbügeln 2, werden die auf Trolleys 4 hängenden Bügel 2 zum Beispiel mit einer an sich bekannten Bügelübernahmeeinrichtung 1 gemäß US-PS 3 982 623 vom Trolley abgenommen und rutschen auf einer geneigten, zweckmäßigerweise sich drehenden Führungsstange 34 zur Zwischenhängestation 7 (Fig. 4).

Die Zwischenhängestation 7 weist vorzugsweise eine Bügelvereinzelungsvorrichtung 35 auf, damit jeder Bügel 2 kontrolliert an einen Zwischenhänger 8 der Reihenfolge entsprechend übergeben werden kann. Bekannt ist zum Beispiel aus dem DE-GM 90 03 011 eine Bügelvereinzelungseinrichtung, die aber sehr aufwendig aufgebaut ist und relativ langsam arbeitet. Außerdem funktioniert diese bekannte Bügelvereinzelungsvorrichtung nur, wenn die Bügelhaken nicht miteinander zufällig verhakt sind, was aber oft der Fall ist. Demgemäß ist eine besondere Aufgabe der vorliegenden Erfindung, eine Bügelvereinzelungsvorrichtung zu schaffen, die einfach aufgebaut ist, schnell arbeitet und mit der auch zufällig miteinander verhakte Bügel sicher vereinzelt werden können. Die in Fig. 4 dargestellte, erfindungsgemäße Bügelvereinzelungseinrichtung 35 weist unterhalb der sich zum Beispiel in Pfeilrichtung 36 drehenden, geneigten Stange 34 zwei zur Stange 34 parallel angeordnete Führungsschienen 37, 38 auf, die derart auf seitlichem Abstand voneinander angeordnet sind, daß sie einen zur Stange 34 achsparallelen, engen Führungsschlitz 39 direkt unterhalb der Stange 34 bilden. In diesem Schlitz 39 gleiten die Hakenhälse 2a der Bügelhaken 2b, während sich die Bügelarme 2c unterhalb der Führungsschienen 37, 38 befinden und die Bügelhaken 2b auf der Stange 34 sitzen. Die Führungsschienen 37, 38 enden etwa mit dem Ende der Stange 34.

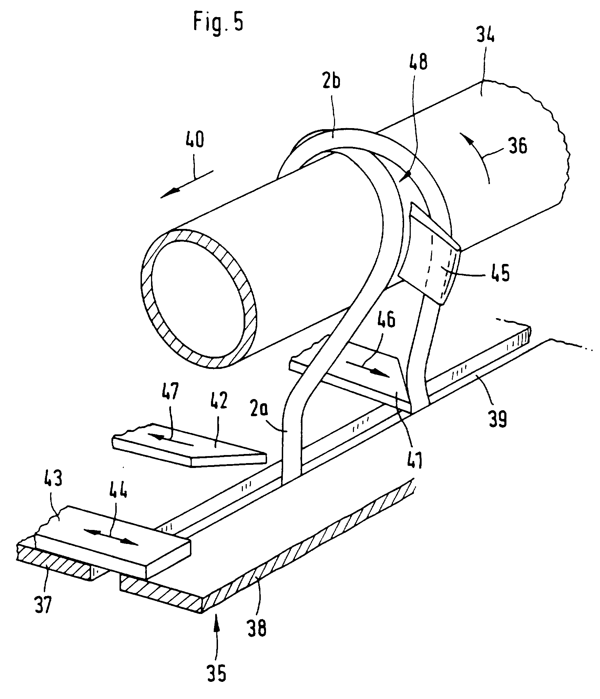

Die Bügelvereinzelungseinrichtung 35 (Fig. 5) weist zudem mindestens zwei in Transportrichtung 40 auf bestimmtem Abstand voneinander positionierte, angespitzte, nadelförmige Trennfinger 41, 42 auf, die über dem Führungsschlitz 39 quer dazu ausgerichtet und mit nicht dargestellten Antriebsmitteln vor- und zurückziehbar gelagert sind. Zweckmäßigerweise ist dem Trennfinger 42 noch ein Stopperfinger 43 im Abstand davon nachgeordnet, der ebenfalls in Doppelpfeilrichtung 44 vor- und zurückschiebbar angetrieben gelagert ist. Zudem trägt die Stange 34 einen sich radial nach außen erstreckenden, flachflügelförmigen Trennmessersteg 45, der in Transportrichtung 40 kurz hinter dem Trennfinger 41 positioniert ist und dessen Flachebene senkrecht zur Drehachse der Stange 34 ausgerichtet ist.

Die erfindungsgemäße Bügelvereinzelungseinrichtung 35, die auch für andere Bügeltransportvorrichtungen verwendbar ist, in denen Bügel vereinzelt werden müssen und/oder dafür gesorgt werden muß, daß gegebenenfalls verhakte Bügel entflochten werden müssen, funktioniert wie folgt:

Die zum Beispiel Bekleidungsstücke 3 tragenden Bügel 2 rutschen auf der sich in Pfeilrichtung 36 drehenden, geneigten Stange 34 schwerkraftbedingt abwärts, wobei der Bügelhals 2a des vordersten Bügels 2 einer Bügelreihe gegen den in Pfeilrichtung 46 vorgeschobenen Trennfinger 41 stößt und die folgenden Bügel aufgestaut werden. Der Trennfinger 42 ist dann in Pfeilrichtung 47 zurückgezogen und der Stopperfinger 43 vorgeschoben. Danach wird Finger 41 zurückgezogen und Finger 42 vorgeschoben, wobei der vorderste Bügelhals gegen den Trennfinger 42 stößt. Anschließend wird der Trennfinger 41 wieder vorgeschoben und schiebt sich hinter den Bügelhals 2a des vordersten Bügels. Der Abstand zwischen den Trennfingern 41, 42 ist demgemäß derart gering, daß nur ein Bügelhakenhals 2a dazwischenpaßt. Kurz darauf wird der Trennfinger 42 zurückgezogen (Pfeilrichtung 47) und gleichzeitig der Trennmessersteg 45 in die Lücke 48 zwischen den vordersten Bügelhakenhals und den nachfolgenden Bügelhakenhals gedreht. Sind diese Bügelhaken nicht miteinander verhakt, rutscht der vorderste Bügel ohne weiteres gegen den vorgeschobenen Stopperfinger 43. Sind die Bügelhaken wie in Fig. 5 dargestellt verhakt, treibt bzw. keilt der Trennmessersteg 45 die Bügelhaken auseinander, so daß dann der vorderste Bügel schwerkraftbedingt ungehindert zum Stopperfinger 43 rutschen kann.

Somit gelingt es mit einfachen Mitteln, eine sehr effektiv und schnell arbeitende Bügelvereinzelungseinrichtung zu schaffen, mit der auch miteinander verhakte Bügel sicher getrennt werden können.

In die erfindungsgemäße Zwischenstation 7 (Fig. 4) laufen die Zwischenhänger 8 auf einer oberhalb der Stange 34 angeordneten, geneigten Zuführstange 49 hängend in Pfeilrichtung 50 schwerkraftbedingt ein, wobei ihre Aussparung 24 entgegengesetzt zur Transportrichtung 50 weist; sie stoßen mit dem Boden ihrer Ringnut 33 etwa in Achshöhe der Rolle 30 gegen die Außenkante 52a einer sich in Transportrichtung (Pfeil 51) drehenden, vertikal angeordneten Hubscheibe 52, die peripher Nocken 53 aufweist, die in die Ringnut 33 greifen können, dabei den Zwischenhänger 8 von der Zuführstange 49 abheben, im Bogen der Außenkante 56 einer etwas unterhalb der Scheibe 52 in derselben Vertikalebene in Transportrichtung nachgeordneten, sich entgegengesetzt drehenden (Pfeilrichtung 57) Mitnahmescheibe 55 zugeführt, wobei in die Ringnut 33 zudem von oben außen eine konkavbogenförmige Führungskante 54 greift, so daß die Rolle 30 nicht von der Hub-scheibe 52 springen kann. Die Mitnahmescheibe 55 weist peripher ebenfalls Nocken 58 auf, die in die Ringnut 33 greifen können, wobei von unten außen eine konkavbogenförmige Führungskante 59 ebenfalls in die Ringnut 33 greift, auf der die Rolle 30 abrollen kann. Die Führungskante 54 und die Außenkante 52a der Hub-scheibe 52 sowie die Führungskante 59 und die Außenkante 56 der Mitnahmescheibe 55 ergeben somit eine etwa sinuskurvenförmige Führungsbahn für die Rolle 30 eines Zwischenhängers 8. Die Transportmittel 52, 55 der Führungsbahn sind derart oberhalb des Auslaufendes der Stange 34 angeordnet, daß ein Zwischenhänger 8 mit seiner geöffneten Aussparung 24 vor dem Ende einer dem Auslaufende der Stange 34 nachgeordneten, geneigten Rutsche 60 positioniert ist, wenn ein Bügel auf der Rutsche 60 gleitet (Fig. 4). Dabei ist der Stopperfinger 43 so getaktet, daß er einen Bügel immer dann freigibt, wenn sich eine geöffnete Aussparung 24 eines Zwischenhängers 8 am Auslaufende der Rutsche 60 befindet.

Zweckmäßigerweise ist die Rutsche 60 im Querschnitt V-förmig und somit in Längsrichtung rinnenförmig ausgebildet, so daß zumindest ein Teilbereich der in Richtung Stange 34 weisenden Aussparung 24 in die V-förmige Rinne der Rutsche 60 eintauchen kann, woraus eine störungsfreie Übernahme eines Bügelhakens 2b resultiert, weil der Bügelhaken auf der Oberkante der Rinne 60 rutscht, während sich die Aussparung 24 teilbereichsweise in der Rinne befindet.

Zur Positionierung der Aussparung 24 ist unterhalb der Mitnehmerscheibe 55 eine V-förmige Stauchtasche 61 angeordnet, in die der seitlich überstehende Bereich des Gewichts 27 des Zwischenhängers 8 eingeführt wird, bis es auf den Boden der Tasche 61 stößt und angehalten wird, wobei der Zwischenhänger noch ein Stück nach unten zwangsgeführt wird, so daß die Aussparung 24 freigegeben wird (Fig. 4). Dabei befindet sich die Rolle 30 des Zwischenhängers 8 zwangsgeführt im Bereich der tiefsten Stelle der Führungsbahn 56/59, wobei die tiefste Stelle der Tasche 61 dieser tiefsten Stelle der Führungsbahn in Transportrichtung 50 etwas vorgeordnet ist, so daß der Zwischenhänger 8 etwas nach vorne geneigt positioniert wird (siehe Fig. 4), wenn die Übernahme des Bügelhakens erfolgt. Sobald sich ein Bügelhaken 2b in der Aussparung 24 befindet, überschreitet die von einem Nocken 58 mitgenommene Rolle 30 den tiefsten Punkt der Führungsbahn und wird samt Zwischenhänger angehoben, zunächst jedoch noch ohne Gewicht. Das Gewicht 27 ruht noch solange in der Tasche 61, bis es vom Anschlagsteg 26 des Lagerstegs 22 mitgenommen wird, wobei vorher die Abdecklasche 28 die Aussparung 24 verschlossen hat, so daß der Bügelhaken 2b unverlierbar in der Aussparung sitzt.

Aus der Führungsbahn 56/59 wird die Rolle 30 nach dem Anheben auf eine geneigte Gleitstange 62 übergeben, auf der der Zwischenhänger 8 zur Transportübernahmestation 11 rollen kann.

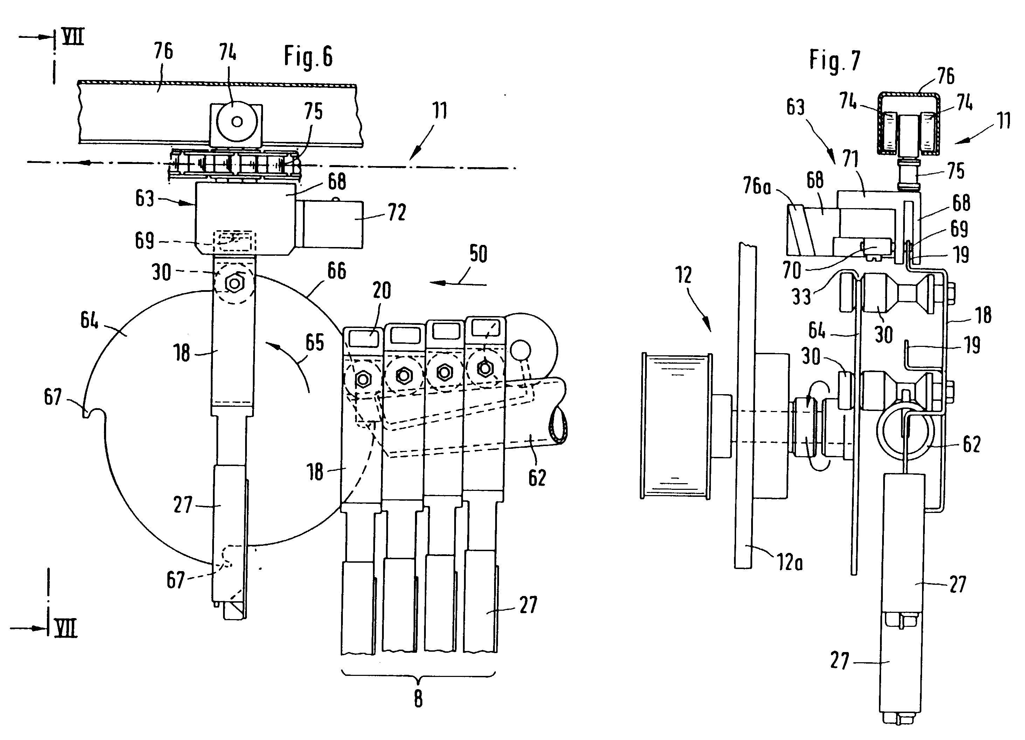

In der Transportübernahmestation 11 (Fig. 6, 7) werden die Zwischenhänger 8, an denen die Bügel 2 mit Bekleidungsstücken 3 hängen, an jeweils einen Transportblock bzw. Transportwagen 63 gehängt. Zu diesem Zweck weist die Station 11 eine sich in Pfeilrichtung 65 drehende, vertikal ausgerichtete Hubscheibe 64 auf, deren Drehachse etwa in der Höhe des Auslaufendes der Gleitstange 62 quer dazu angeordnet ist und die so positioniert ist, daß die Außenkante 66 der Hubscheibe 64 in die Rille 33 einer Rolle 30 eingreifen kann, die sich am Auslaufende der Gleitstange 62 durch zum Beispiel einen Finger (nicht dargestellt) in Wartestellung gehalten befindet. An der Peripherie bzw. Außenkante 66 der Hubscheibe 64 sind Nocken 67 vorgesehen, die die Rille 33 untergreifen und die Rolle 30 samt Anhang auf einer Bogenbahn nach oben mitnehmen.

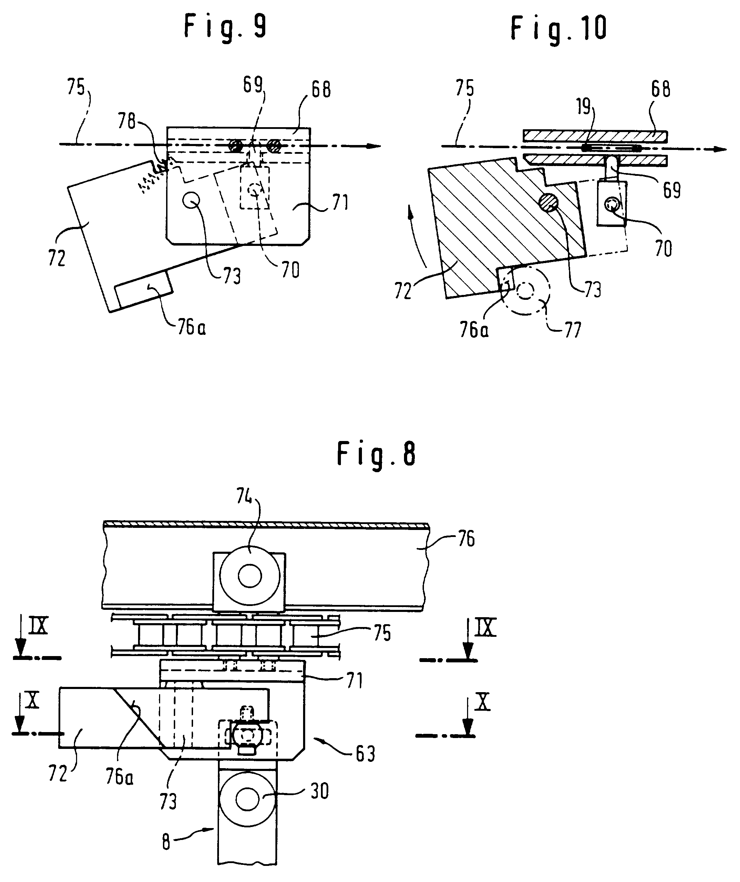

Im Zenit der Bogenbahn befindet sich bei Ankunft einer Rolle 30 jeweils ein Transportwagen 63, der eine nach unten offene Traggabel 68 aufweist, zwischen deren Gabelarme der Einhängesteg 19 von einer Nocke 67 gehoben wird. Ein Gabelarm weist ein Loch auf, das von einem Stift 69 durchgriffen wird, dessen vorderes Ende gegen die Innenwandung des anderen Gabelarms stößt oder dort in eine Vertiefung oder ein Loch eintaucht. Der Stift 69 ist anderendig mit einem Schwenklager 70 (Fig. 10) am vorderen Ende eines federbelasteten Schwenkhebels 72 angeordnet, der mit einem Schwenklager 73 an einer Lagerplatte 71 sitzt, die an der Traggabel 68 angeordnet ist.

Die Wagen 63 sind mit bestimmtem Abstand voneinander an einer endlos geführten, angetriebenen Kette 75 der Transportstrecke 10 befestigt, wobei die Kette vorzugsweise eine Gallkette ist, die - wie abgebildet in Fig. 8 - mit vertikal ausgerichteten Kettengliedern geführt wird, wobei die Transportwagen 63 unter der Kette 75 hängen. Zur Führung der Kette 75 und der Transportwagen 63 sind in bestimmtem Abstand jeweils oberhalb eines Transportblocks 63 an der Kette befestigte Laufrollen 74 mit quer zur Längserstreckung der Kette ausgerichteten Achsen oberhalb der Kette angeordnet, die in einer Rechteckrohrschiene 76 abrollen.

Zum Einhängen eines Zwischenhängers 8 fährt ein Wagen 63 mit einer am Schwenkhebel 72 vorgesehenen Auflaufschräge 76a an einer in der Station 11 festsitzenden Auflaufrolle 77 vorbei, die den Hebel 72 verschwenkt, so daß der Stift 69 aus dem Zwischenraum der Gabel 68 gleitet. Danach wird der Einhängesteg 19 eines Zwischenhängers 8 in diesen Zwischenraum gehoben, bis sich die Öse 20 im Eingreifbereich des Stifts 69 befindet; danach verläßt die Rolle 77 die Führungsbahn bzw. Auflaufschräge 76, so daß der Hebel 72 aufgrund der Wirkung der Feder 78, die sich an der Gabel 68 abstützt und am Hebel 72 angreift, zurückschwenkt und der Stift 69 die Öse 20 durchgreift. Damit hängt der Zwischenhänger 8 samt Anhang am Transportwagen 63. Das Anhängen erfolgt im kontinuierlichen Betrieb der Kette 75. Die mit dem Antrieb 12 bewirkte Hubbewegung der am Maschinenrahmen 12a gelagerten Hubscheibe 64 ist mit dem Transportweg eines Wagens 63 derart synchronisiert, daß die Übernahme mittels kontinuierlicher Bewegungen erfolgen kann.

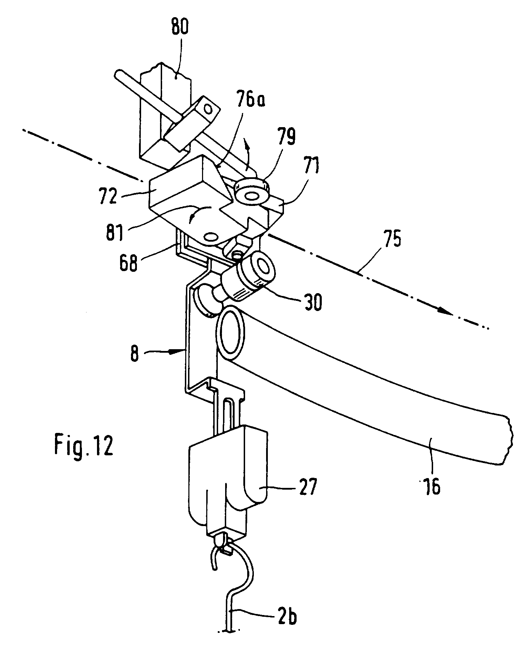

Die der Einhängestation 11 nachgeordneten, fest installierten Ausschleusstationen 14 im Bereich der Ausschleusstrecke 15 weisen zum Beispiel am Schienenrohr 76 befestigte Schaltrollen 79 auf, die mit einer Schaltvorrichtung 80 in den Weg der Auflaufschräge 76a eines Wagens 63 geschwenkt werden können (Fig. 12). Unterhalb einer Rolle 79 befindet sich der Anfang einer geneigten Sortierstange 16. Läuft die Rolle 79 auf eine Auflaufschräge 76a, wird der Hebel 72 in Pfeilrichtung 81 verschwenkt und der Stift 69 aus der Öse 20 gezogen. Daraufhin fällt die Rolle 30 samt Anhang auf die geneigte Sortierstange 16 und rollt schwerkraftbedingt zur Abhängestation 17.

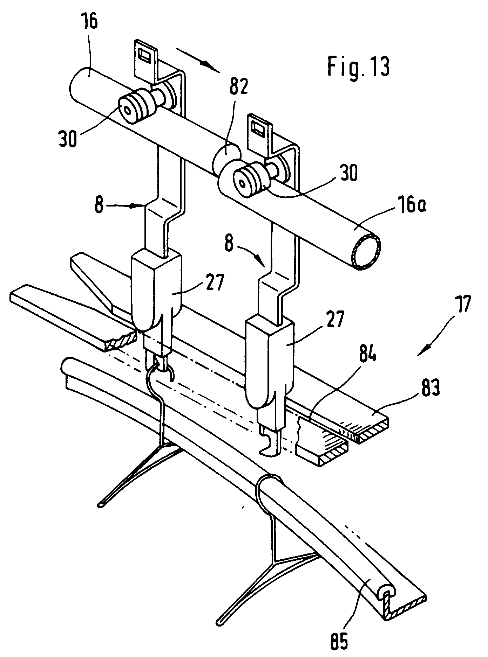

Die Abhängestation 17, die in Fig. 13 perspektivisch und prinzipiell dargestellt ist, weist eine Sprungstufe 82 in der Sortierstange 16, auf der die Zwischenhänger 8 angerollt kommen, auf. Im Bereich unterhalb der Stufe 82 ist eine Stauchschiene 83 mit einem vertikal unter der Sortierstange 16 insbesondere im Bereich unter der Stufe 82 vorgesehenen Führungsschlitz 84 angeordnet, wobei durch den Führungsschlitz der unterhalb des Gewichts 27 befindliche Bereich des Lagerstegs 22 gleitet. Der Abstand der Schiene 83 von der Sortierstange 16 ist so gewählt, daß der Zwischenhänger 8 mit seinem Lagersteg 22 vor der Stufe frei im Schlitz 84 gleiten kann. Fällt die Rolle 30 jedoch die Stufe 82 herunter, stoßen die Seitenbereiche des Gewichts 27 auf die Schienen 83, wobei der Lagersteg 22 weiter durch den Schlitz 84 rutscht, bis die Rolle 30 auf den abgestuften Bereich 16a der Sortierstange 16 trifft. Dabei öffnet sich die Aussparung 24 infolge des Aufstauchens des Gewichts 27, und der Bügelhaken 2b kann schwerkraftbedingt auf der nach unten geneigten Kante 24a aus der Aussparung 24 herausgleiten und auf eine unter der Schiene 83 angeordnete, geneigte Auslieferungsstange 85 fallen, auf der er samt Anhang zur gegebenenfalls automatischen Abnahme gestaut wird. Die sich auf der Stange 16a ansammelnden Zwischenhänger 8 werden zweckmäßigerweise automatisch, zum Beispiel über geneigte Stangen, der Zwischenhängestation 7 wieder zugeführt.

## Patentansprüche

1. Verfahren zum automatischen Sortieren von auf Haken (2) hängendem, mit einer Kodierung in Verbindung stehendem Gut (3), insbesondere von auf Kleiderbügeln hängenden Bekleidungsstükken, in einer Sortiervorrichtung, die Hängefördereinrichtungen mit einer Sortiertransportstrecke (10) mit einer Ausschleusstrecke (15) mit mehreren Ausschleusstationen (14) aufweist, wobei die Haken mit dem jeweiligen Gut in einer Reihe antransportiert und der Sortiertransportstrecke aufgegeben werden und ein vorbestimmter Haken einer Hakenreihe an einer vorbestimmten Ausschleusstation aufgrund der Kodierung programmiert ausgeschleust wird,
**dadurch gekennzeichnet**, daß jeder Haken vor dem Aufgeben auf die Sortiertransportstrecke an einen Zwischenhänger (8) gehängt wird, der zum hängenden Abrollen auf einer Schiene des Transportsystems der Sortiervorrichtung mit einer Rolle (30) ausgerüstet ist, und der Zwischenhänger mit der Hängefördereinrichtung der Sortiertransportstrecke in Eingriff gebracht wird.

2. Verfahren nach Anspruch 1,
**dadurch gekennzeichnet**,
daß Zwischenhänger (8) verwendet werden, die am Fußende eine Aufnahmeeinrichtung für einen Haken und im Bereich des Kopfendes die Rolle aufweisen.

3. Verfahren nach Anspruch 1 oder 2,
**dadurch gekennzeichnet**,
daß jeder Zwischenhänger samt Haken mit Gut zum Transport in der Ausschleusstrecke am Anfang der Ausschleusstrecke an einen an einem Endlosförderer mit untereinander bestimmtem Abstand festsitzenden Mitnehmer automatisch angehängt und in einer vorbestimmten Schleusenstation vom Mitnehmer automatisch abgehängt wird und samt Haken mit Gut auf einer Sortierstange zu einer Abhängestation rollt.

4. Verfahren nach einem der Ansprüche 1 bis 3,
**dadurch gekennzeichnet**,
daß die Haken samt Gut in der jeweiligen Abhängestation automatisch vom Zwischenhänger getrennt werden.

5. Verfahren nach einem der Ansprüche 1 bis 4,
**dadurch gekennzeichnet**,
daß Zwischenhänger (8) verwendet werden, die mit der dem Gut entsprechenden Kodierung versehen sind.

6. Vorrichtung zum automatischen Sortieren von in einer Reihe antransportiertem, an Haken (2) hängendem Gut, insbesondere von auf Kleiderbügeln hängenden Bekleidungsstücken, mit einer Hakenübernahmestation (1), einer Hängefördereinrichtungen aufweisenden Sortiertransportstrecke (10) mit einer Ausschleusstrecke (15), in der Ausschleusstationen (14) angeordnet sind, sowie mit den Ausschleusstationen (14) nachgeordneten Sammelstationen (85) und einer mit einer Kodierung zusammenwirkenden Steuereinrichtung, insbesondere zur Durchführung des Verfahrens nach einem oder mehreren der Ansprüche 1 bis 5,
**gekennzeichnet durch** Zwischenhänger (8), die, jeweils einen Haken (2) haltend und an der Hängefördereinrichtung hängend,die Haken (2) samt Gut durch die Sortiervorrichtung begleiten.

7. Vorrichtung nach Anspruch 6,
**dadurch gekennzeichnet**,
daß jeder Zwischenhänger (8) die dem Gut entsprechende Kodierung trägt.

8. Vorrichtung nach Anspruch 6 oder 7,
**dadurch gekennzeichnet**,
daß der Zwischenhänger (8) im wesentlichen aus einem Flachstahlbandstab (18) besteht, der kopfendig einen vertikal ausgerichteten Einhängesteg (19) mit einer Einhängeöse (20) aufweist, an dem sich nach unten eine seitlich aus der Bandebene abgebogene, U-förmige Abkröpfung (21) anschließt, unterhalb der sich ein vertikal ausgerichteter Lagersteg (22) befindet, der fußendig mit einer in Transportrichtung nach hinten offenen Hakenaufnahme in Form einer Aussparung (24) mit Verschließmitteln versehen ist.

9. Vorrichtung nach Anspruch 8,
**dadurch gekennzeichnet**,
daß an der Vorderkante (25) des Lagerstegs (22) etwa in Höhe der Aussparung (24) ein rechtwinklig aus der Bandebene abgebogener Anschlagsteg (26) angeordnet ist.

10. Vorrichtung nach Anspruch 8 oder 9,
**dadurch gekennzeichnet**,
daß auf dem Lagersteg frei vertikal gleitend ein Gewicht (27) sitzt, das kürzer ist als der Abstand zwischen dem Anschlagsteg (26) und dem unteren abgewinkelten U-Schenkelsteg (21a) der Abkröpfung (21) und demgemäß zwischen dem unteren abgewinkelten U-Schenkel (21a) der Abkröpfung (21) und dem Anschlagsteg (26) frei verschiebbar ist.

11. Vorrichtung nach Anspruch 10,
**dadurch gekennzeichnet**,
daß auf dem Gewicht (27) eine Abdecklasche (28) angeordnet ist, die das Gewicht ein Stück nach unten überragt und so angeordnet und positioniert ist, daß es die Aussparung (24) abdeckt bzw. verriegelt, wenn sich das Gewicht (27) in der untersten Stellung befindet.

12. Vorrichtung nach einem der Ansprüche 8 bis 11,
**dadurch gekennzeichnet**,
daß kurz unterhalb des oberen U-Schenkels (21b) der Abkröpfung (21) eine Drehachse (29) im U-Bodensteg (21c) horizontal und senkrecht auf der Bodenstegebene stehend befestigt ist, die eine Laufrolle (30) frei drehend lagert.

13. Vorrichtung nach Anspruch 12,
**dadurch gekennzeichnet**,
daß die Laufrolle (30) im wesentlichen die Kontur einer Nähgarnrolle mit einer radialen Abmagerung (31) mit konvexer Abrollfläche aufweist zur Abstützung auf einer von der Rolle übergriffenen, komplementär gestalteten Laufschiene bzw. Laufstange (62,16), wobei die axiale Mitte der Abmagerung (31) in der Flachbandebene (32) des Einhängestegs (19) und des Lagerstegs (22) liegt.

14. Vorrichtung nach Anspruch 12 oder 13,
**dadurch gekennzeichnet**,
daß außerhalb der Abmagerung (31) in dem dem U-Bodensteg (21c) gegenüberliegenden Bereich der Laufrolle (30) eine Ringnut (33) eingebracht ist.

15. Vorrichtung nach einem der Ansprüche 8 bis 14,
**dadurch gekennzeichnet**,
daß auf dem Gewicht (27) eine Kodierung angeordnet ist.

16. Vorrichtung nach einem der Ansprüche 8 bis 15,
**dadurch gekennzeichnet**,
daß auf dem U-Bodensteg (21c) eine Kodierung angeordnet ist.

17. Vorrichtung nach einem der Ansprüche 6 bis 16,
**gekennzeichnet durch**
eine Hakenübernahmeeinrichtung (1), die einlaufseitig der Sortiervorrichtung angeordnet ist und eine sich drehende Führungsstange (34) aufweist, die in eine Zwischenhängestation (7), integriert ist, die zum Zwischenhängen der Zwischenhänger (8) dient.

18. Vorrichtung nach Anspruch 17,
**gekennzeichnet durch**
eine Hakenvereinzelungsvorrichtung (35) zur kontrollierten Weiterleitung vereinzelter Bügel an eine einen Zwischenhänger (8) positionierende Übernahmeeinrichtung.

19. Vorrichtung nach Anspruch 17 oder 18,
**dadurch gekennzeichnet**,
daß oberhalb der Stange (34) eine geneigte Zuführstange (49) angeordnet ist, auf der die Zwischenhänger (8) hängend, schwerkraftbedingt in die Zwischenstation (7) einlaufen, wobei ihre Aussparung (24) entgegengesetzt zur Transportrichtung (50) weist, und daß am Ende der Zuführstange (49) etwa in Achshöhe der Rolle (30) eines Zwischenhängers (8), der Ringnut (33) gegenüberliegend, die Außenkante (52a) einer sich in Transportrichtung drehenden, vertikal angeordneten Hubscheibe (52) angeordnet ist, die zum Eingreifen in die Ringnut (33) peripher Nocken (53) aufweist, wobei der Hub-Scheibe (52) etwas unterhalb nachgeordnet, eine in derselben Vertikalebene angeordnete, sich entgegengesetzt drehende Mitnahmescheibe (55) vorgesehen ist und in die Ringnut zudem von oben außen eine konkavbogenförmige Führungskante (54) eines Führungsblechs greift, die Mitnahmescheibe (55) ebenfalls peripher Nocken (58) aufweist, die in die Ringnut (33) greifen, wobei von unten außen eine konkavbogenförmige Führungskante (59) ebenfalls in die Ringnut greifend angeordnet ist, so daß die Führungskante (54) und die Außenkante (52a) der Hubscheibe (52) sowie die Führungskante (59) und die Außenkante (56) der Mitnahmescheibe (55) eine etwa sinuskurvenförmige Führungsbahn für die Rolle (30) eines Zwischenhängers (8) ergeben, und daß die Transportmittel (52,55) der Führungsbahn derart oberhalb des Auslaufendes der Stange (34) angeordnet sind, daß ein Zwischenhänger (8) mit seiner geöffneten Aussparung (24) vor dem Ende einer dem Auslaufende der Stange (34) nachgeordneten, geneigten Rutsche (60) positioniert ist, wenn ein Haken auf der Rutsche (60) gleitet.

20. Vorrichtung nach Anspruch 19,
**dadurch gekennzeichnet**,
daß die Rutsche (60) rinnenförmig ausgebildet ist, wobei zumindest ein Teilbereich der in Richtung Stange (34) weisenden Aussparung (24) eines Zwischenhängers (8) in die V-förmige Rinne der Rutsche (60) eintauchen kann, wenn der Haken (2) auf der Oberkante der Rinne (60) rutscht.

21. Vorrichtung nach Anspruch 20,
**dadurch gekennzeichnet**,
daß zur Positionierung der Aussparung (24) unterhalb der Mitnehmerscheibe (55) eine V-förmige Stauchtasche (61) angeordnet ist, in die der seitlich überstehende Bereich des Gewichts (27) des Zwischenhängers (8) eingeführt wird, bis es auf den Boden der Tasche (61) stößt und angehalten wird, wobei der Zwischenhänger noch ein Stück nach unten zwangsgeführt und die Aussparung (24) freigegeben wird, bis sich die Rolle (30) des Zwischenhängers (8) zwangsgeführt im Bereich der tiefsten Stelle der Führungsbahn (56,59) befindet, wobei die tiefste Stelle der Tasche (61) der tiefsten Stelle der Führungsbahn (56/59) in Transportrichtung (50) etwas vorgeordnet ist.

22. Vorrichtung nach Anspruch 21,
**dadurch gekennzeichnet**,
daß der Führungsbahn (56,59) eine geneigte Gleitstange (62) nachgeordnet ist, auf der die Zwischenhänger zu einer Transportübernahmestation (11) rollen.

23. Vorrichtung nach einem der Anspruche 6 bis 22,
**dadurch gekennzeichnet**,
daß die Transportübernahmestation (11) eine vertikal ausgerichtete, der Gleitstange (62) nachgeordnete Hubscheibe (64) aufweist, deren Drehachse etwa in Höhe des Auslaufendes der Gleitstange (62) und quer dazu angeordnet ist, wobei die Hubscheibe (62) derart positioniert ist, daß ihre Außenkante (62) mit Nocken (67) in die Rille (33) einer Rolle (30) eingreifen kann, so daß ein Zwischenhänger (8) auf einer Bogenbahn angehoben wird.

24. Vorrichtung nach Anspruch 23,
**dadurch gekennzeichnet**,
daß sich im Zenit der Bogenbahn bei Ankunft einer Rolle (30) jeweils ein Transportwagen (63) befindet.

25. Vorrichtung nach Anspruch 24,
**dadurch gekennzeichnet**,
daß der Transportwagen (63) eine nach unten offene Traggabel (68) aufweist, zwischen deren Gabelarme der Einhängesteg (19) von einer Nocke (67) gehoben wird, ein Gabelarm ein Loch aufweist, das von einem Stift (69) durchgriffen wird, dessen vorderes Ende gegen die Innenwandung des anderen Gabelarms stößt oder dort in eine Vertiefung oder ein Loch eintaucht, der Stift anderendig mit einem Schwenklager (70) am vorderen Ende eines federbelasteten Schwenkhebels (72) angeordnet ist, der mit einem Schwenklager (73) an einer Lagerplatte (71) sitzt, die an der Traggabel (68) angeordnet ist, wobei der Tragwagen in bestimmtem Abstand von weiteren Tragwagen an einer endlos geführten, angetriebenen Kette (75) der Transportstrecke (10) befestigt ist.

26. Vorrichtung nach Anspruch 25,
**dadurch gekennzeichnet**,
daß die Kette (75) eine Gallkette ist, die mit vertikal ausgerichteten Kettengliedern geführt wird, wobei die Transportwagen (63) unter der Kette (75) hängen und zur Führung der Kette (75) und der Transportwagen (63) in bestimmtem Abstand jeweils oberhalb eines Transportwagens (63) an der Kette befestigte Laufrollen (74) mit quer zur Längserstreckung der Kette ausgerichteten Achsen oberhalb der Kette angeordnet sind, die in einer Rechteckrohrschiene (76) hängend abrollen.

27. Vorrichtung nach einem der Ansprüche 24 bis 26,
**dadurch gekennzeichnet**,
daß jeder Wagen (63) mit einer am Schwenkhebel (72) vorgesehenen Auflaufschräge (76a) ausgerüstet ist, die mit einer in der Station (11) festsitzenden Auflaufrolle (77) zusammenwirkt.

28. Vorrichtung nach einem der Ansprüche 6 bis 27,
**dadurch gekennzeichnet**,
daß die Ausschleusstationen (14) im Bereich der Ausschleusstrecke (15) zum Beispiel am Schienenrohr (76) befestigte Schaltrollen (79) aufweisen, die mit einer Schaltvorrichtung (80) in den Weg der Auflaufschräge (76a) eines Wagens (63) schwenkbar sind.

29. Vorrichtung nach Anspruch 28,
**dadurch gekennzeichnet**,
daß unterhalb der Rolle (79) sich der Anfang einer geneigten Sortierstange (16) befindet.

30. Vorrichtung nach einem der Ansprüche 6 bis 29,
**gekennzeichnet durch**
eine Abhängestation (17) zum Abhängen der Zwischenhänger (8).

31. Vorrichtung nach Anspruch 30,
**dadurch gekennzeichnet**,
daß die Abhängestation (17) eine Sprungstufe (82) in der Sortierstange (16) aufweist, vertikal unter der Sortierstange (16) und parallel dazu ein Führungsschlitz (84) angeordnet ist, durch den der unterhalb des Gewichts (27) eines Zwischenhängers (8) befindliche Bereich des Lagerstegs (22) gleiten kann, und daß der Abstand des Führungsschlitzes (84) von der Sortierstange (16) so gewählt ist, daß der Zwischenhänger (8) mit seinem Lagersteg (22) vor der Stufe (82) frei im Schlitz (84) gleiten kann und das Gewicht (27) oberhalb des Schlitzes angeordnet ist, während das Gewicht auf die Seitenwandungen des Schlitzes (84) stößt, wenn die Rolle (30) die Stufe (82) herunterfällt.

32. Vorrichtung nach einem der Ansprüche 6-31, **gekennzeichnet** durch eine Bügelvereinzelungsvorrichtung mit zwei auf bestimmtem Abstand voneinander positionierten, angespitzten, nadelförmigen, vor- und zurückziehbar gelagerten und angetriebenen vorderen und hinteren Trennfingern (41,42),
wobei unterhalb einer sich drehenden, die Bügelhaken (2b) tragenden, geneigten Stange (34) zwei zur Stange (34) parallel angeordnete Führungsschienen (37,38) angeordnet sind, die derart auf seitlichem Abstand voneinander positioniert sind, die einen zur Stange (34) achsparallelen, engen Führungsschlitz (39) direkt unterhalb der Stange (34) bilden, wobei in diesem Schlitz (39) die Hakenhälse (2a) der Bügelhaken (2b) frei, jedoch geführt gleiten, während sich die Bügelarme (2c) unterhalb der Führungsschienen (37,38) befinden und die Führungsschienen (37,38) etwa mit dem Ende der Stange (34) enden, und wobei die Trennfinger (41,42) quer zum Führungsschlitz (39) ausgerichtet, kurz über dem Führungsschlitz (39) angeordnet sind und die Stange (34) einen sich radial nach außen erstreckenden, flachflügelförmigen Trennmessersteg (45) aufweist, der in Transportrichtung (40) kurz hinter dem vorderen Trennfinger (41) positioniert ist und dessen Flachebene senkrecht zur Drehachse der Stange (34) ausgerichtet ist.

33. Bügelvereinzelungsvorrichtung nach Anspruch 32,
**dadurch gekennzeichnet**,
daß dem hinteren Trennfinger (42) ein Stopperfinger (43) im Abstand davon nachgeordnet und parallel dazu ausgerichtet ist, der vor- und zurückschiebbar angetrieben gelagert ist.

## Claims

1. A process for the automatic sorting of articles (3) suspended from hooks (2) and associated with a code, in particular articles of clothing hanging from coat hangers, in a sorting process which comprises an overhead transport system with a sorting stretch (10) incorporating a diverting section (15) with a plurality of diverting stations (14), in which the hooks with the articles are transported in a row and delivered to the sorting transport section, and a particular hook in a series of hooks is diverted at a particular diverting station on the basis of the programmed code,
characterised in that prior to being delivered to the sorting transport section each hook is hung on an intermediate hanger (8) which is equipped with a roller (30) for rolling along a rail of the transport system of the sorting device and the intermediate hanger is caused to engage with the hanger transport device of the sorting transport stretch.

2. A process according to claim 1,
characterised in that intermediate hangers (8) which have a hook pick-up device at the bottom end and a roller in the vicinity of the top end are used.

3. A process according to claim 1 or 2,
characterised in that each intermediate hanger together with hooks with items for transport in the diverting section are automatically suspended on carriages at a specified spacing on an endless delivery system at the start of the diversion stretch and are automatically taken off the carriage at the specified diverting station and roll together with the hooks and articles on a sorting spur to a take-off station.

4. A process according to any one of claims 1 to 3,
characterised in that the hooks together with the items are automatically separated from the intermediate hangers at each take-off station.

5. A process according to any one of claims 1 to 4, characterised in that intermediate hangers (8) which are provided with a code corresponding to the articles are used.

6. Means for the automatic sorting of items hanging on hooks (2) transported in a row, in particular of items of clothing hanging on coat hangers, with a hook pick-up station (1), an overhead transport device incorporating sorting transport stretches (10) with a diverting section (15), into which diverting stations (14) are incorporated, together with collection stations (85) placed downstream from the diverting stations (14) and a control device operating together with a code, in particular to carry out the process according to one or more of claims 1 to 5,
characterised by intermediate hangers (8) which each have a hook (2) and which being supported from the overhead transport device accompany the hooks (2) together with the items through the sorting process.

7. A device according to claim 6,
characterised in that each intermediate hanger (8) carries a code corresponding to the item.

8. A device according to claim 6 or 7,
characterised in that the intermediate hanger (8) substantially comprises a flat bar of steel (18), the top end of which has a vertically orientated suspension arm (19) with a suspension eye (20), connected below to a lateral U-shaped deviation (21) away from the plane of the bar, beneath which there is a vertical stock (22), which is provided at the bottom end with a hook recess which opens away from the direction of transport in the form of a recess (24) with locking means.

9. A device according to claim 8,
characterised in that a striking pin (26) is provided on the front edge (25) of the stock (22) projecting at right angles from the plane of the bar substantially on a level with the recess (24).

10. A device according to claim 8 or 9,
characterised in that a weight (27), which is shorter than the distance between the striking pin (26) and the downwardly angled U-limb (21a) of the deviation (21), and is accordingly free to slide between the downwardly angled U-limb (21a) of the deviation (21) and the stock (26), is mounted so that it can slide freely and vertically on the stock.

11. A device according to claim 10,
characterised in that a covering tongue (28) is arranged on the weight (27), which projects beneath the weight and is positioned and arranged in such a way that it covers and locks the recess (24) when the weight (27) is in the lowest position.

12. A device according to one of claims 8 to 11,
characterised in that a shaft (29) is permanently fixed to the back limb of the U (21c) horizontally and at right angles to the plane of the bar a short distance beneath the upper U-limb (21b) of the deviation (21) and supports a freely rotating running roller (30).

13. A device according to claim 12,
characterised in that the running roller (30) substantially has the contour of a bobbin with a radial narrowing (31) with convex rolling surfaces for support on a rail or running bar (62, 16) of complementary shape engaged by the roller, in which the axial centre of the narrowing (31) lies in the plane of the bar (32) of the supporting arm (19) and the stock (22).

14. A device according to claim 12 or 13,
characterised in that an annular groove (33) is provided beyond the narrowing (31) in the part of the running roller (30) away from the rear limb of the U (21c).

15. A device according to one of claims 8 to 14,
characterised in that a code is placed on the weight (27).

16. A device according to any one of claims 8 to 15,
characterised in that a code is placed on the rear limb of the U (21c).

17. A device according to any one of claims 6 to 16,
characterised by a hook pick-up device (1) which is located on the inward side of the sorting device and has a rotating guide rod (34) which is incorporated into an intermediate overhead station (7) which serves to provide an intermediate support for the intermediate hangers (8).

18. A device according to claim 17,
characterised by a hook isolating device (35) for the controlled transport of individual coat hangers to a intermediate hanger (8) positioning take-up device.

19. A device according to claim 17 or 18,
characterised in that an inclined lead-in rod (49), on which the intermediate hangers (8) are supported and run into the intermediate station (7) under the force of gravity, is mounted above the rod (34), in which their recesses (24) are opposite to the direction of transport (50), and in that at the end of the guide rod (49) on a level with the axis of the roller (30) of an intermediate hanger (8), opposite the annular groove (33), there is the outer edge (52a) of a vertically mounted lifting disk (52) which rotates in the direction of transport, which has peripheral notches (53) to engage in the annular grooves (33), where the lifting disk (52) is provided with a pick-up disk (55) which rotates in the opposite direction, mounted in the same vertical plane, in a position behind and slightly below it, and engages a guide bar in the annular grooves from above on the outside of a concave guide edge (54), the pick-up disk (55) likewise has peripheral notches (58) which engage the annular groove (33), with the result that the outside of a concavely curved guide edge (59) likewise engages the annular groove from beneath, so that the guide edge (54) and the outside edge (52a) of the lifting disk (52) and the guide edge (59) and the outside edge (56) of the pick-up disk (55) provide a sinusoidally shaped guide track for the roller (30) of an intermediate hanger (8), and in that the transport means (52, 55) of the guide track is arranged above the delivery end of rod (34) in such a way that an intermediate hanger (8) is positioned with its open recess (24) in front of the end of an inclined slide (60) placed behind the delivery end of the rod (34) when a hook slides down the slide (60).

20. A device according to claim 19
characterised in that the slide (60) is constructed in the shape of a gutter, which can receive at least part of the recess (24) of an intermediate hanger (8) pointing towards the rod (34) in the V-shaped gutter of the slide (60) when the hook (2) slides on the upper edge of the gutter (60).

21. A device according to claim 20
characterised in that in order to position the recess (24) beneath the pick-up wheel (55) a V-shaped tilting pocket (61) is provided in which the laterally projecting portion of the weight of (27) of the intermediate hanger (8) is introduced until it impacts the base of the pocket (61) and is held back, whereupon the intermediate hanger is inclined slightly downwards and the recess (24) is unlocked, until the roller (30) of the intermediate hanger (8) is carried into the vicinity of the bottom point of the guide track (56, 59), wherein the bottom point of the pocket (61) is placed somewhat in front of the bottom point of the guide track (56/59) in the direction of transport (50).

22. A device according to claim 21
characterised in that the guide track (56, 59) has behind it an inclined slip rod (62) on which the intermediate hangers roll to a transport pick-up station (11).

23. A device according to any one of claims 6 to 22
characterised in that the transport pick-up station (22) has a vertically mounted lifting disk (64) behind the slip rod (62), the axis of rotation of which disk is substantially on a level with the delivery end of the slip rod (62) and arranged transversely thereto, wherein the lifting disk (62) is positioned in such a way that its outer edge (62) with notches (67) can engage the groove (33) of a roller (30) so that the intermediate hanger (8) is lifted onto a curved track.

24. A device according to claim 23
characterised in that the transport carriage (63) is located at the top of the curved track when a roller (30) arrives.

25. A device according to claim 24
characterised in that the transport carriage (63) has a supporting fork (68) which opens downwards, between the forks of which the supporting arm (19) is lifted by a notch (67), a fork arm has a hole which is engaged by a rod (69), the front end of which impacts against the inner wall of the other fork arm or enters into a recess or hole there, the other end of the rod being equipped with a hinge mounting (70) on the front end of a spring-loaded swinging lever (72) which rests on a supporting plate (71) with a hinge mounting (73) which is arranged on the carrying hook (68), wherein the carriage is secured at a specific distance from other carriages on an endless driven chain (75) of the transport stretch (10).

26. A device according to claim 25
characterised in that the chain (75) is a roller link chain, which is driven with vertically mounted members, wherein the carriages (63) hang beneath the chain (75), and rollers (74) secured to the chain at a particular distance above a carriage (63) with axes mounted above the chain at right angles to the longitudinal direction of the chain guide the chain (75) and the carriages (63), rolling suspended in a tubular rectangular rail (76).

27. A device according to any one of claims 24 to 26
characterised in that each carriage (63) is equipped with a run-off wedge (76a) mounted on a hinge lever (72) which acts together with the fixed run-off roller (77) at the station (11).

28. A device according to one of claims 6 to 27,
characterised in that the diverting stations (14) in the vicinity of the diverting section (15) have switching rollers (79) secured for example to the tubular rail (76) which can swing with a switching device (80) in the way of the run-off wedge (76a) of a carriage (63).

29. A device according to claim 28
characterised in that the start of an inclined sorting rod (16) is located beneath the roller (79).

30. A device according to one of claims 6 to 29,
characterised by a take-off station (17) to take off the intermediate hangers (8).

31. A device according to claim 30,
characterised in that the taking-off station (17) has a drop step (82) on the sorting rod (16), a guide slot (84) is arranged vertically beneath the sorting rod (16) and parallel thereto, through which the portion of the stock (22) beneath the weight (27) of an intermediate hanger (8) can slide, and that the distance between the guide slot (84) and the sorting rod (16) is selected in such a way that the intermediate hanger (8) with its stock (22) can slide freely in the slot (84) before the step (82) and the weight (27) is located above the slot, while the weight impacts against the lateral walls of the slot (84) when the roller (30) drops down the step (82).

32. A device according to any one of claims 6 to 31,
characterised by a coat hanger separating device with two pointed needle-shaped separating fingers (41, 42) which are mounted so that they can be drawn forwards and backwards and driven forwards and backwards, positioned at a specific distance from each other, in which two guide rails (37, 38) are arranged parallel to a rotating inclined rod (34), beneath the rod (34) which draws the coat hanger hooks (2b), which are thus positioned at a lateral spacing from each other, the rails forming a narrow guide slot (39) having an axis parallel to the rod (34) directly beneath the rod (34), in which slot (39) the hook necks (2a) of the coat hangers (2b) glide freely, but in a guided way, while the coat hanger arms (2c) are located beneath the guide rails (37, 38) and the guide rails (37, 38) end at the end of the rod (34), and in which the separating fingers (41, 42) are directed at right angles to the guide slot (39), a little way above the guide slot (39), and the rod (34) has a flat wing-like separating projection (45) extending radially outwards which is positioned immediately behind the front separating finger (41) in the direction of transport (40) and whose plane is at right angles to the axis of rotation of the rod (34).

33. A coat hanger separating device according to claim 32,
characterised in that the rear separating finger (42) is provided with a stop finger (43) at a distance from it and parallel to it, which is mounted in such a way that it can be driven to slide forwards and backwards.

## Revendications

1. Procédé pour le triage automatique d'articles (3) suspendus à des crochets (2), en relation avec un codage, en particulier de vêtements suspendus sur des cintres, dans un dispositif de triage, qui présente des installations de transport suspendu avec une voie de transport de triage (10) avec une voie d'aiguillage (15) ayant plusieurs stations d'aiguillage (14), les crochets avec l'article respectif étant amenés dans une rangée et transférés sur la voie- de transport de triage, et un crochet prédéterminé d'une rangée de crochets étant aiguillé de façon programmée en fonction du codage, caractérisé en ce que chaque crochet, avant d'être transféré sur la voie de transport de triage, est suspendu sur un support intermédiaire (8), qui, pour un déroulement suspendu sur un rail du système de transport du dispositif de triage, est équipé d'une poulie (30), et en ce que le support intermédiaire est enclenché dans le dispositif de transport suspendu de la voie de transport de triage.

2. Procédé selon la revendication 1, caractérisé en ce que des supports intermédiaires (2) sont utilisés, qui présentent du côté pied une installation de réception pour un crochet et dans la partie du côté tête une poulie.

3. Procédé selon la revendication 1 ou 2, caractérisé en ce que chaque support intermédiaire, avec crochet et article, pour le transport sur la voie d'aiguillage, est accroché automatiquement au début de la voie d'aiguillage sur un transporteur sans fin avec un entraîneur bloqué à une certaine distance réciproque, et est décroché automatiquement de l'entraîneur dans une station d'aiguillage prédéterminée, et roule avec crochet et article sur une barre de triage vers une station de décrochage.

4. Procédé selon l'une quelconque des revendications 1 à 3, caractérisé en ce que les crochets avec articles sont séparés automatiquement du support intermédiaire dans la station de décrochage respective.

5. Procédé selon l'une quelconque des revendications 1 à 4, caractérisé en ce que des supports intermédiaires (8) sont utilisés qui sont munis du codage correspondant à l'article.

6. Dispositif pour le triage automatique d'articles, suspendus à des crochets (2), amenés en une rangée, en particulier de vêtements suspendus sur des cintres, avec une station de transfert de crochet (1), une voie de transport de triage (10) présentant des installations de transport suspendu, avec une voie d'aiguillage (15), sur laquelle sont disposées des stations d'aiguillage (14), ainsi qu'avec des stations collectrices (85) disposées après les stations d'aiguillage (14), et une installation de commande coopérant avec le codage, en particulier pour l'exécution du procédé selon l'une quelconque ou plusieurs des revendications 1 à 5, caractérisé par des supports intermédiaires (8), qui accompagnent les crochets (2) avec article à travers le dispositif de triage en portant chacun un crochet (2) et en étant suspendu à une installation de transport suspendu.

7. Dispositif selon la revendication 6, caractérisé en ce que chaque support intermédiaire (8) porte le codage correspondant à l'article.

8. Dispositif selon la revendication 6 ou 7, caractérisé en ce que le support intermédiaire (8) consiste essentiellement en une tige en ruban d'acier plat (18), qui présente en tête une barrette d'accrochage (19), orientée verticalement avec un oeil d'accrochage (20), à laquelle s'ajoute vers le bas un coude (21) en forme de U, plié latéralement à partir du plan du ruban, au-dessous duquel se trouve une barrette de palier (22), orientée verticalement, qui est munie côté pied d'une réception de crochet ouverte vers l'arrière sous la forme d'un évidement (24) avec des moyens de fermeture.

9. Dispositif selon la revendication 8, caractérisé en ce que au bord antérieur (25) de la barrette de palier (22), environ à la hauteur de l'évidement (24), est disposée une barrette de butée (26), pliée perpendiculairement à partir du plan du ruban.

10. Dispositif selon la revendication 8 ou 9, caractérisé en ce que, sur la barrette de palier, repose un poids (27) glissant librement dans le sens vertical, qui est plus court que la distance entre la barrette de butée (26) et la barrette à branche en forme de U coudée inférieure (21a) du coude (21), et est donc librement mobile entre la branche en forme de U coudée inférieure (21a) du coude (21) et la barrette de butée (26).

11. Dispositif selon la revendication 10, caractérisé en ce que sur le poids (27) est disposé un collier de recouvrement (28), dont une partie dépasse le poids vers le bas, et qui est disposé et positionné de sorte qu'il recouvre ou verrouille l'évidement (24) lorsque le poids (27) se trouve dans la position la plus basse.

12. Dispositif selon l'une quelconque des revendications 8 à 11, caractérisé en ce que, juste au-dessous de la branche en forme de U (21b) supérieure du coude (21), un axe de rotation (29) est fixé dans la barrette de fond en forme de U (21c), placé horizontalement et verticalement sur le plan de la barrette de fond, axe qui reçoit une poulie libre (30) tournant librement.

13. Dispositif selon la revendication 12, caractérisé en ce que la poulie libre (30) présente essentiellement le contour d'une bobine à flancs tronconiques, ayant un rétrécissement (31) radial avec une surface de déroulement convexe, pour s'appuyer sur un rail de roulement ou une glissière . (62, 16), réalisé(e) de façon complémentaire et recouvert(e) par la poulie, le centre axial du rétrécissement (31) se trouvant dans le plan du ruban plat (32) de la barrette d'accrochage (19) et de la barrette de palier (22).

14. Dispositif selon la revendication 12 ou 13, caractérisé en ce qu'une rainure annulaire (33) est insérée en dehors du rétrécissement (31) dans la partie de la poulie libre (30) en face de la barrette de fond (21c) en forme de U.

15. Dispositif selon l'une quelconque des revendications 8 à 14, caractérisé en ce qu'un codage est disposé sur le poids (27).

16. Dispositif selon l'une quelconque des revendications 8 à 15, caractérisé en ce qu'un codage est disposé sur la barrette de fond (21c) en forme de U.

17. Dispositif selon l'une quelconque des revendications 6 à 16, caractérisé en ce que l'installation de transfert de crochet (1), qui est disposée du côté de l'arrivée du dispositif de triage et qui présente une barre de guidage (34) tournante, qui est intégrée dans une station d'accrochage (7) intermédiaire, qui sert à accrocher temporairement les supports intermédiaires (8).

18. Dispositif selon la revendication 17, caractérisé par un dispositif d'isolation de crochet (35) pour transmettre de façon contrôlée des cintres isolés à une installation de transfert qui positionne un support intermédiaire (8).

19. Dispositif selon la revendication 17 ou 18, caractérisé en ce que, au-dessus de la barre (34), une barre d'alimentation (49) inclinée est disposée, sur laquelle les supports intermédiaires (8) arrivent suspendus par gravité dans la station intermédiaire (7), leur évidement (24) étant orienté à l'opposé de la direction de transport (50), et en ce qu'à l'extrémité de la barre d'alimentation (49), environ à la hauteur de l'axe de la poulie (30) d'un support intermédiaire (8), en face de la rainure annulaire (33), le bord extérieur (52a) d'un disque à came (52), disposé verticalement, tournant dans la direction de transport, est disposé, qui présente des cames périphériques (53) pour s'enclencher dans la rainure annulaire (33), un disque d'entraînement (55) étant prévu, disposé un peu au-dessous après le disque à came (52), disposé sur le même plan vertical, tournant dans le sens contraire, et de plus un bord de guidage (54) en forme d'arc concave d'une tôle de guidage s'enclenchant d'en haut et de l'extérieur dans la rainure annulaire, le disque d'entraînement (55) présentant également des cames périphériques (58) qui s'enclenchent dans la rainure annulaire (33), un bord de guidage (59) en forme d'arc concave s'enclenchant également d'en bas et de l'extérieur dans la rainure annulaire, de sorte que le bord de guidage (54) et le bord extérieur (52a) du disque à came (52), ainsi que le bord de guidage (59) et le bord extérieur (56) du disque d'entraînement (55) produisent une glissière approximativement en forme d'onde sinusoïdale pour la poulie (30) d'un support intermédiaire (8), et en ce que les moyens de transport (52, 55) de la glissière sont disposés au-dessus de l'extrémité de sortie de la barre (34) de telle sorte qu'un support intermédiaire (8) avec son évidement (24) ouvert est positionné avant l'extrémité d'un toboggan (60) incliné, placée après l'extrémité de sortie de la barre (34), quand un crochet glisse sur le toboggan (60).

20. Dispositif selon la revendication 19, caractérisé en ce que le toboggan (60) est réalisé sous la forme d'une rigole, au moins une zone partielle de l'évidement (24), orienté dans la direction de la barre (34), d'un support intermédiaire (8) pouvant plonger dans la rigole en forme de V du toboggan (60) quand le crochet (2) glisse sur le bord supérieur de la rigole (60).

21. Dispositif selon la revendication 20, caractérisé en ce que, pour le positionnement de l'évidement (24) au-dessous du disque d'entraînement (55), une poche à refouler (61) en forme de V est disposée dans laquelle est introduite la partie dépassant latéralement du poids (27) du support intermédiaire (8), jusqu'à ce qu'elle touche le fond de la poche (61) et est arrêtée, le support intermédiaire étant encore forcé un peu vers le bas et l'évidement (24) étant libéré jusqu'à ce que la poulie (30) du support intermédiaire (8) se trouve forcée dans la partie de la position la plus basse de la glissière (56, 59), la position la plus basse de la poche (61) étant disposée un peu avant la position la plus basse de la glissière (56/59) dans la direction de transport (50).

22. Dispositif selon la revendication 21, caractérisé en ce que la glissière (56, 59) est suivie d'une barre coulissante (62) inclinée sur laquelle les supports intermédiaires roulent vers une station de transfert de transport (11).

23. Dispositif selon l'une quelconque des revendications 6 à 22, caractérisé en ce que la station de transfert de transport (11) présente un disque à came (64) suivant la barre coulissante (62), orienté verticalement, dont l'axe de rotation est placé environ à la hauteur de l'extrémité de sortie de la barre coulissante (62) et transversalement par rapport à celle-ci, le disque à came (62) étant positionné de telle sorte que son bord extérieur (62) avec des cames (67) puisse s'enclencher dans la rigole (33) d'une poulie (30), de sorte qu'un support intermédiaire (8) est soulevé sur une voie voûtée.

24. Dispositif selon la revendication 23, caractérisé en ce qu'au zénith de la voie voûtée se trouve un véhicule de transport (63) chaque fois qu'une poulie (30) arrive.

25. Dispositif selon la revendication 24, caractérisé en ce que le véhicule de transport (63) présente une fourche porteuse (68) ouverte vers le bas, entre les branches de laquelle la barrette d'accrochage (19) est soulevée par une came (67), en ce qu'une branche de fourche présente un trou qui est traversé par une tige (69), dont l'extrémité avant bute contre la paroi intérieure de l'autre branche de fourche ou y plonge dans un évidement ou un trou, en ce que l'autre extrémité de la tige avec un palier pivotant (70) est disposée à l'extrémité avant d'un levier pivotant (72), chargé par ressort, qui repose avec un palier pivotant (73) sur une plaque de palier (71), qui est disposée au niveau de la fourche porteuse (68), le véhicule de support étant fixé à une certaine distance des autres véhicules de transport sur une chaîne (75) commandée, guidée sans fin, de la voie de transport (10).

26. Dispositif selon la revendication 25, caractérisé en ce que la chaîne (75) est une galle, qui est guidée avec des maillons de chaîne orientés verticalement, les véhicules de transport (63) étant suspendus sous la chaîne (75), et pour le guidage de la chaîne (75) et des véhicules de transport (63) des poulies libres (74) sont fixées sur la chaîne à une certaine distance, respectivement au-dessus d'un véhicule de transport (63), avec des axes orientés transversalement par rapport à l'étendue longitudinale de la chaîne, poulies qui déroulent en étant suspendues dans un rail tubulaire rectangulaire (76).

27. Dispositif selon l'une quelconque des revendications 24 à 26, caractérisé en ce que chaque véhicule (63) est équipé d'un plan incliné d'arrêt (76a), prévu au niveau du levier pivotant (72), plan qui coopère avec un rouleau d'arrêt (77) bloqué dans la station (11).

28. Dispositif selon l'une quelconque des revendications 6 à 27, caractérisé en ce que les stations d'aiguillage (14) au niveau de la voie d'aiguillage (15) présentent par exemple des galets d'entraînement (79) fixés sur le rail tubulaire (76), qui peuvent être pivotés par l'intermédiaire d'un dispositif d'aiguillage (80) dans le chemin du plan incliné d'arrêt (76a) d'un véhicule (63).

29. Dispositif selon la revendication 28, caractérisé en ce que le début d'une barre de triage (16) inclinée se trouve au-dessous du galet (79).

30. Dispositif selon l'une quelconque des revendications 6 à 29, caractérisé par une station de décrochage (17) pour décrocher les supports intermédiaires (8).

31. Dispositif selon la revendication 30, caractérisé en ce que la station de décrochage (17) présente une barre de saut (82) dans la barre de triage (16), verticalement sous la barre . de triage (16), et parallèlement à celle-ci une fente de guidage (84) est disposée, à travers laquelle la partie de la barrette de palier (22), qui se trouve au-dessous du poids (27) d'un support intermédiaire (8), peut glisser, et en ce que la distance de la fente de guidage (84) de la barre de triage (16) est choisie de telle sorte que le support intermédiaire (8) peut glisser librement avec sa barrette de palier (22) avant la barre (82) dans la fente (84), et le poids (27) est disposé au-dessus de la fente, tandis que le poids bute contre les parois latérales de la fente (84) quand la poulie (30) tombe de la barre (82).

32. Dispositif selon l'une quelconque des revendications 6 à 31, caractérisé par un dispositif d'isolation de cintre avec deux doigts de séparation (41, 42) avant et arrière, positionnés à une certaine distance l'un de l'autre, aiguisés, en forme d'aiguille, situés de façon à pouvoir être avancés et reculés, et commandés, deux rails de guidage (37, 38) disposés parallèlement à la barre (34) étant disposés au-dessous d'une barre (34) inclinée, tournante et portant les crochets de cintre (2b), rails qui sont ainsi positionnés à une distance latérale l'un de l'autre, qui forment une fente de guidage (39) étroite, parallèle à l'axe de la barre (34), directement au-dessous de la barre (34), les cols de crochets (2a) des crochets de cintre (2b) glissant librement mais de façon guidée dans cette fente (39), tandis que les bras de cintre (2c) se trouvent au-dessous des rails de guidage (37, 38), et les rails de guidage (37, 38) se terminent à peu près à l'extrémité de la barre (34), et les doigts de séparation (41, 42) étant orientés transversalement à la fente de guidage (39), disposés juste au-dessus de la fente de guidage (39), et la barre (34) présente une barrette de couteau de séparation (45) en forme d'ailé plate, s'étendant radialement vers l'extérieur, qui est positionné dans la direction dé transport (40), juste après le doigt de séparation avant (41) et dont le plan plat est orienté verticalement par rapport à l'axe de rotation de la barre (34).

33. Dispositif d'isolation de cintre selon la revendication 32, caractérisé en ce qu'un doigt de butée (43) est agencé en retrait à une certaine distance du doigt de séparation (42) et parallèlement à celui-ci, situé de façon à pouvoir avancer et reculer.
